# FASCICULE DE BREVET EUROPEEN

(11) **EP 1 489 335 B1**
(45) Date de publication et mention de la délivrance du brevet: **06.07.2016**
(21) Numéro de dépôt: 04291529.8
(22) Date de dépôt: 17.06.2004
(51) Int. Cl.: F16F 13/10

(54) **Support antivibratoire hydraulique**
Hydraulisches, schwingungsdämpfendes Lager
Hydraulic antivibration support

(30) Priorité: 20.06.2003 FR 0307476
(43) Date de publication de la demande: 22.12.2004
(73) Titulaire: HUTCHINSON, 75008 Paris (FR)
(72) Inventeur: Visage, Hervé, 28200 Chateaudun (FR); Lecordier, Julien, 28200 Chateaudun (FR); Ligouy, Michael, 28200 Chateaudun (FR)
(74) Mandataire: Cabinet Plasseraud

(56) Documents cités:
- EP-A- 0 635 656
- EP-A- 0 980 990
- EP-A- 1 113 187
- FR-A- 2 796 432
- US-A1- 2003 080 482

## Description

La présente invention est relative aux supports antivibratoires hydrauliques.

Plus particulièrement, l'invention concerne un support antivibratoire hydraulique destiné à être interposé entre deux éléments rigides et comportant :
- des première et deuxième armatures rigides destinées à être fixées aux deux éléments rigides à réunir,
- un corps en élastomère qui relie entre elles les première et deuxième armatures et qui délimite partiellement une chambre de travail remplie de liquide,
- une paroi souple qui délimite partiellement une chambre de compensation remplie de liquide et reliée à la chambre de travail par un passage étranglé,
- une cloison rigide solidaire de la deuxième armature, qui sépare la chambre de travail et la chambre de compensation, la cloison rigide présentant une périphérie extérieure plate, ladite chambre de compensation étant délimitée entre ladite cloison rigide et ladite paroi souple,
- et un renfort annulaire rigide qui est directement fixé à la périphérie de la paroi souple et qui est engagé dans la deuxième armature, le renfort annulaire étant serré axialement contre la périphérie extérieure plate de la cloison rigide, cette périphérie extérieure présentant une épaisseur inférieure au renfort annulaire, le renfort annulaire comportant une gorge périphérique recouverte par la cloison rigide et délimitant le passage étranglé avec la cloison rigide.

Le document EP-A-0 980 990 décrit un exemple d'un tel support antivibratoire, qui présente notamment l'inconvénient d'être relativement encombrant en hauteur et de ne pas garantir une géométrie précise au niveau de l'appui du renfort annulaire et de l'élastomère de la paroi souple, contre la cloison rigide.

La présente invention a notamment pour but de pallier ces inconvénients.

A cet effet, selon l'invention, un support antivibratoire du genre en question est caractérisé en ce que le renfort annulaire est entièrement disposé en regard de la périphérie extérieure plate de la cloison rigide et est en appui contre ladite périphérie extérieure plate de part et d'autre de la gorge.

Dans divers modes de réalisation de l'invention, on peut éventuellement avoir recours en outre à l'une et/ou à l'autre des dispositions suivantes :
- la paroi souple est surmoulée sur le renfort annulaire ;
- la paroi souple est adhérisée sur le renfort annulaire ;
- la paroi souple est emboîtée sur le renfort annulaire ;
- le renfort annulaire est serré contre la cloison rigide ;
- une partie annulaire de la paroi souple est interposée entre le renfort annulaire et la cloison rigide ;
- le renfort annulaire est fixé à la deuxième armature par au moins un sertissage, ce sertissage serrant également ledit renfort annulaire contre la cloison rigide ;
- le passage étranglé communique avec la chambre de travail par l'intermédiaire d'un évidement ménagé dans la cloison rigide ;
- une partie de la paroi souple tapisse intérieurement la gorge périphérique du renfort annulaire :
   cette disposition permet, le cas échéant, de réaliser des passages étranglés de diverses sections avec un même renfort annulaire, et donc d'obtenir des fréquences de résonance différentes du passage étranglé ; on peut ainsi utiliser un même renfort annulaire dans des supports antivibratoires différents, présentant des caractéristiques antivibratoires différentes, d'où une économie due à la standardisation de ce renfort annulaire ;
- la cloison rigide comporte deux tôles superposées qui présentent respectivement des parties centrales renflées formant des grilles et délimitant entre elles un logement central contenant un organe de clapet souple adapté pour vibrer avec un débattement limité entre les deux grilles, lesquelles communiquent respectivement avec la chambre de travail et avec la chambre de compensation, et les deux tôles superposées formant en outre ladite périphérie extérieure plate de la cloison rigide autour desdites parties centrales renflées.

D'autres caractéristiques et avantages de l'invention apparaîtront au cours de la description suivante d'une de ses formes de réalisation, donnée à titre d'exemple non limitatif, en regard du dessin joint.

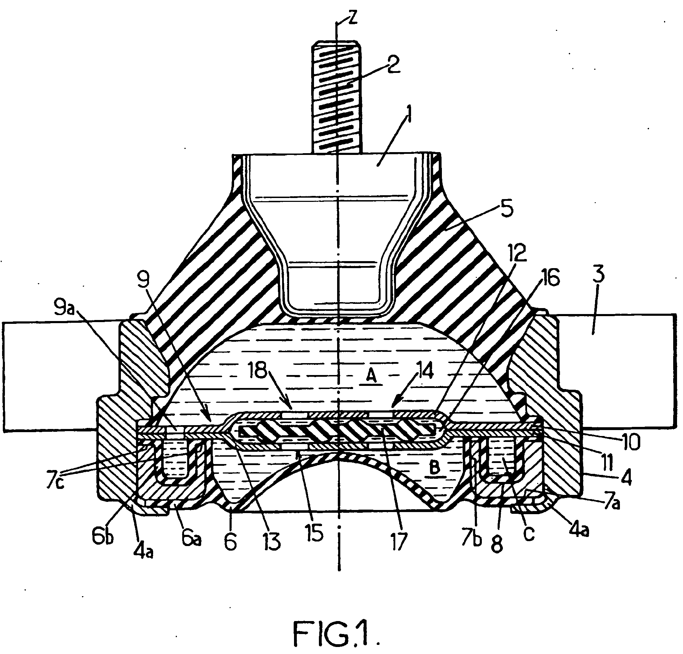

Sur le dessin, la figure 1 est une vue en coupe verticale d'un support antivibratoire hydraulique selon une forme de réalisation de l'invention.

La figure 1 représente un support antivibratoire hydraulique qui comporte une première armature rigide 1 présentant la forme d'une embase métallique solidaire d'un goujon 2 qui est dirigé vers le haut selon un axe central vertical Z et qui est destiné à être fixé par exemple au moteur d'un véhicule.

Le support antivibratoire comporte en outre une deuxième armature métallique rigide 3 qui est destinée à être fixée par exemple à la caisse du véhicule et qui comporte notamment une couronne métallique 4.

Les première et deuxième armatures sont reliées entre elles par un corps en élastomère 5 capable de supporter notamment les efforts statiques dus au poids du moteur. Ce corps en élastomère peut présenter par exemple une forme de cloche qui s'étend entre un sommet surmoulé et adhérisé sur l'embase 1 et une base annulaire surmoulée et adhérisée sur la couronne 4.

Par ailleurs, le support antivibratoire comporte également une paroi souple 6, aisément déformable, généralement réalisée en élastomère. Cette paroi souple est solidarisée directement avec un renfort annulaire rigide 7, qui peut être réalisé en métal ou éventuellement en matière plastique et qui est emboîté de façon étanche à l'intérieur de la couronne 4 de la deuxième armature, de façon que le corps en élastomère 5, la deuxième armature 3 et la paroi souple 6 délimitent un boîtier fermé rempli de liquide.

Le renfort annulaire 7 comporte une gorge intérieure 8 périphérique, qui s'étend sur moins de 360° et qui est ouverte parallèlement à l'axe Z vers le corps en élastomère 5.

Dans l'exemple représenté sur la figure 1, la paroi souple 6 comporte une membrane 6a, venue de matière avec l'ensemble de la paroi souple, qui tapisse la face inférieure 7a du renfort annulaire 7, c'est-à-dire la face de ce renfort qui est située à l'opposé du corps en élastomère 5, tandis qu'une autre membrane 6b, venue de matière avec le reste de la paroi souple 6, tapisse la face radialement intérieure 7b du renfort annulaire 7 ainsi que la face supérieure 7c dudit renfort (c'est-à-dire la face de ce renfort orientée axialement vers le corps en élastomère 5) et la surface intérieure de la gorge 8.

Avantageusement, la paroi souple 6 est surmoulée et adhérisée sur le renfort rigide 7, mais le cas échéant, cette paroi souple pourrait être uniquement surmoulée sans adhérisation, ou encore, ladite paroi souple 6 pourrait être moulée indépendamment du renfort annulaire 7, puis emboîté sur ce renfort annulaire en se fixant ainsi à lui par clipsage.

Par ailleurs, une cloison rigide 9, réalisée par exemple en métal ou le cas échéant en matière plastique, est interposée entre le renfort annulaire 7 et la base du corps en élastomère. Avantageusement, le renfort annulaire 7 est serré axialement contre la cloison rigide 9, avec interposition de la membrane 6b venue de matière avec la paroi souple 6. Ce serrage axial peut être obtenu par exemple par un sertissage réalisé entre la couronne 4 et le renfort annulaire 7. Par exemple, la couronne 4 peut comporter des pattes 4a qui sont rabattues sous le renfort annulaire 7 pour réaliser ce sertissage.

La cloison rigide 9 sépare l'intérieur du support antivibratoire en une chambre de travail A, 'délimitée partiellement par le corps en élastomère 5, et une chambre de compensation B, délimitée partiellement par la paroi souple 6. Ces deux chambres A, B sont remplies de liquide et communiquent entre elles par l'intermédiaire d'un passage étranglé C lui-même rempli de liquide, qui est délimité entre la gorge 8 du renfort annulaire et la cloison rigide 9. Ce passage étranglé C communique avec la chambre de travail A par l'intermédiaire d'un évidement 9a ménagé dans la cloison rigide, et il communique avec la chambre de compensation B par l'intermédiaire d'un évidement supplémentaire (non représenté) qui est ménagé radialement vers l'intérieur dans le renfort annulaire 7.

Le passage étranglé C permet des transferts de liquide entre la chambre de travail A et la chambre de compensation B, ce qui permet notamment d'amortir des mouvements vibratoires de relativement grandes amplitudes (par exemple supérieures à 1 mm) et de relativement faibles fréquences (par exemple, inférieures à 20 Hz) entre le moteur et la caisse du véhicule, notamment les mouvements de "hachis" dus au roulage du véhicule sur une surface irrégulière.

Avantageusement, la cloison rigide 9 présente une périphérie extérieure plate et perpendiculaire à l'axe central Z, au niveau du renfort annulaire 7. Cette périphérie extérieure présente une épaisseur nettement inférieure au renfort annulaire 7, parallèlement à l'axe central Z.

En particulier, la cloison rigide 9 peut être constituée par une ou deux tôles, et ladite périphérie extérieure de la cloison rigide présente alors une épaisseur limitée à l'épaisseur de la ou des tôles constituant la cloison rigide.

Dans l'exemple représenté sur la figure 1, la cloison rigide 9 est constituée de deux tôles superposées 10, 11, qui peuvent être symétriques l'une de l'autre.

Avantageusement, ces deux tôles 10, 11 peuvent présenter des parties centrales renflées 12, 13 qui forment respectivement des grilles 14, 15. Ces grilles 14, 15 communiquent respectivement avec la chambre de travail A et avec la chambre de compensation B et délimitent entre elles un logement de clapet 16 qui contient un organe de clapet 17.

Cet organe de clapet 17 est constitué par exemple par une membrane souple en élastomère adaptée pour pouvoir vibrer avec un débattement limité (par exemple, inférieur à environ 0,5 mm) entre les deux grilles 14, 15. L'organe de clapet 17 forme ainsi avec les grilles 14, 15 un clapet de découplage 18 adapté pour absorber les vibrations de faible amplitude (par exemple inférieures à 1 mm) et de relativement grandes fréquences (par exemple, supérieures à 20 Hz) appliquées par le moteur à la première armature 1.

On notera que, du fait que la paroi souple 6 en élastomère tapisse l'intérieur de la gorge 8, on peut obtenir la section de passage souhaitée du passage étranglé C en jouant sur l'épaisseur de la membrane d'élastomère 6b. Ainsi, un même renfort annulaire 7 peut être utilisé dans plusieurs supports antivibratoires différents, pour lesquels différentes sections de passage sont souhaitées pour le passage étranglé C. La section de passage en question détermine en effet la fréquence de résonance du passage étranglé C, et permet donc de déterminer les caractéristiques d'amortissement du support antivibratoire à relativement basse fréquence (par exemple inférieure à 20 Hz).

## Revendications

1. Support antivibratoire hydraulique destiné à être interposé entre deux éléments rigides et comportant :
- des première et deuxième armatures (1, 3) rigides destinées à être fixées aux deux éléments rigides à réunir,
- un corps en élastomère (5) qui relie entre elles les première et deuxième armatures (1, 3) et qui délimite partiellement une chambre de travail (A) remplie de liquide,
- une paroi souple (6) qui délimite partiellement une chambre de compensation (B) remplie de liquide et reliée à la chambre de travail (A) par un passage étranglé (C),
- une cloison rigide (9) solidaire de la deuxième armature (3), qui sépare la chambre de travail (A) et la chambre de compensation (B), la cloison rigide (9) présentant une périphérie extérieure plate, ladite chambre de compensation (B) étant délimitée entre ladite cloison rigide (9) et ladite paroi souple (6),
- et un renfort annulaire (7) rigide qui est directement fixé à la périphérie de la paroi souple (6) et qui est engagé dans la deuxième armature (3), le renfort annulaire (7) étant serré axialement contre la périphérie extérieure plate de la cloison rigide, cette périphérie extérieure présentant une épaisseur inférieure au renfort annulaire,
le renfort annulaire (7) comportant une gorge périphérique (8) recouverte par la cloison rigide (9) et délimitant le passage étranglé (C) avec la cloison rigide,
**caractérisé en ce que** le renfort annulaire (7) est entièrement disposé en regard de la périphérie extérieure plate de la cloison rigide (9) et est en appui contre ladite périphérie extérieure plate de part et d'autre de la gorge (8).

2. Support antivibratoire selon la revendication 1, dans lequel la paroi souple (6) est surmoulée sur le renfort annulaire (7).

3. Support antivibratoire selon la revendication 1 ou la revendication 2, dans lequel la paroi souple (6) est adhérisée sur le renfort annulaire (7).

4. Support antivibratoire selon l'une quelconque des revendications précédentes, dans lequel la paroi souple (6) est emboîtée sur le renfort annulaire (7).

5. Support antivibratoire selon l'une quelconque des revendications précédentes, dans lequel le renfort annulaire (7) est serré contre la cloison rigide (9).

6. Support antivibratoire selon la revendication 5, dans lequel une partie annulaire de la paroi souple est interposée entre le renfort annulaire (7) et la cloison rigide (9).

7. Support antivibratoire selon la revendication 5 ou la revendication 6, dans lequel le renfort annulaire (7) est fixé à la deuxième armature par au moins un sertissage (4a), ce sertissage serrant également ledit renfort annulaire contre la cloison rigide (9).

8. Support antivibratoire selon l'une quelconque des revendications précédentes, dans lequel le passage étranglé (C) communique avec la chambre de travail (A) par l'intermédiaire d'un évidement (9a) ménagé dans la cloison rigide (9).

9. Support antivibratoire selon l'une quelconque des revendications précédentes, dans lequel une partie (6b) de la paroi souple (6) tapisse intérieurement la gorge périphérique (8) du renfort annulaire.

10. Support antivibratoire selon l'une quelconque des revendications précédentes, dans lequel la cloison rigide (9) comporte deux tôles superposées (10, 11) qui présentent respectivement des parties centrales renflées (12, 13) formant des grilles (14, 15) et délimitant entre elles un logement central (16) contenant un organe de
clapet (17) souple adapté pour vibrer avec un débattement limité entre les deux grilles (14, 15), lesquelles communiquent respectivement avec la chambre de travail (A) et avec la chambre de compensation (B), et les deux tôles superposées formant en outre ladite périphérie extérieure plate de la cloison rigide autour desdites parties centrales renflées (12, 13).

## Patentansprüche

1. Hydraulisches Antivibrations-Trageelement, welches dazu vorgesehen ist, zwischen zwei starre Elemente eingefügt zu werden, und welches umfasst:
- erste und zweite starre Gestelle (1, 3), welche dazu vorgesehen sind, an den beiden zu koppelnden starren Elementen angebracht zu werden,
- einen Elastomer-Körper (5), welcher die ersten und zweiten Gestelle (1, 3) miteinander verbindet und welcher teilweise eine mit Flüssigkeit gefüllte Arbeitskammer (A) begrenzt,
- eine flexible Wandung (6), welche teilweise eine Ausgleichskammer (B) begrenzt, welche mit Flüssigkeit gefüllt ist und mit der Arbeitskammer (A) durch einen verengten Durchgang (C) verbunden ist,
- eine mit dem zweiten Gestell (3) verbundene starre Trennwand (9), welche die Arbeitskammer (A) und die Ausgleichskammer (B) trennt, wobei die starre Trennwand (9) einen ebenen Außenumfang aufweist, wobei die Ausgleichskammer (B) zwischen der starren Trennwand (9) und der flexiblen Wandung (6) begrenzt ist,
- und eine starre ringförmige Verstärkung (7), welche direkt an dem Umfang der flexiblen Wandung (6) befestigt ist und welche in das zweite Gestell (3) einfügt ist, wobei die ringförmige Verstärkung (7) axial gegen den ebenen Außenumfang der starren Trennwand anliegt, wobei der Außenumfang eine Stärke aufweist, welche kleiner ist die ringförmige Verstärkung,
wobei die ringförmige Verstärkung (7) einen Umfangshals (8) umfasst, welcher von der starren Trennwand (9) bedeckt ist und den verengten Durchgang (C) mit der starren Trennwand bildet,
**dadurch gekennzeichnet, dass** die ringförmige Verstärkung (7) bezüglich des ebenen Außenumfangs der starren Trennwand (9) vollständig gegenüber angeordnet ist und in Anlage gegen den ebenen Außenumfang auf beiden Seiten des Halses (8) ist.

2. Antivibrations-Trageelement nach Anspruch 1, wobei die flexible Wandung (6) auf die ringförmige Verstärkung (7) aufgegossen ist.

3. Antivibrations-Trageelement nach Anspruch 1 oder Anspruch 2, wobei die flexible Wandung (6) auf der ringförmigen Verstärkung (7) aufgeklebt ist.

4. Antivibrations-Trageelement nach einem der vorhergehenden Ansprüche, wobei die flexible Wandung (6) auf der ringförmigen Verstärkung (7) eingepasst ist.

5. Antivibrations-Trageelement nach einem der vorhergehenden Ansprüche, wobei die ringförmige Verstärkung (7) gegen die starre Trennwand (9) anliegt.

6. Antivibrations-Trageelement nach Anspruch 5, wobei ein ringförmiger Abschnitt der flexiblen Wandung zwischen der ringförmigen Verstärkung (7) und der starren Trennwand (9) eingefügt ist.

7. Antivibrations-Trageelement nach Anspruch 5 oder Anspruch 6, wobei die ringförmige Verstärkung (7) an dem zweiten Gestell mittels wenigstens einer Bördelung (4a) befestigt ist, wobei die Bördelung ebenfalls gegen die ringförmige Verstärkung (9) anliegt.

8. Antivibrations-Trageelement nach einem der vorhergehenden Ansprüche, wobei der verengte Durchgang (C) mit der Arbeitskammer (A) über Vermittlung einer Aussparung (9a) verbunden ist, welche in der starren Trennwand (9) gebildet ist.

9. Antivibrations-Trageelement nach einem der vorhergehenden Ansprüche, wobei ein Abschnitt (6b) der flexiblen Wandung (6) den Umfangshals (8) der ringförmigen Verstärkung innen auskleidet.

10. Antivibrations-Trageelement nach einem der vorhergehenden Ansprüche, wobei die starre Trennwand (9) zwei überlagerte Bleche (10, 11) umfasst, welche jeweils zwei bauchige zentrale Abschnitte (12, 13) aufweisen, welche Gitter (14, 15) bilden und zwischen einander eine zentrale Kammer (16) begrenzen, welche ein flexibles Klappenelement (17) enthält, welches dazu eingerichtet ist, über einen zwischen den beiden Gittern (14, 15) begrenzten Weg zu schwingen, welche jeweils mit der Arbeitskammer (A) und mit der Ausgleichskammer (B) verbunden sind, und die beiden überlagerten Bleche ferner den ebenen Außenumfang der starren Trennwand um die bauchigen zentralen Abschnitte (12, 13) herum bilden.

## Claims

1. A hydraulic antivibration support for interposing between two rigid elements and comprising:
- first and second rigid strength members (1, 3) for fixing to the two rigid elements that are to be united;
- an elastomer body (5) interconnecting the first and second strength members (1,3) and defining part of a working chamber (A) filled with liquid;
- a flexible wall (6) defining part of a compensation chamber (B) filled with liquid and connected to the working chamber (B) via a constricted passage (C);
- a rigid partition (9) secured to the second strength member (3) and separating the working chamber (A) from the compensation chamber (B), the rigid partition presenting an outer periphery that is flat, said compensation chamber being defined between said rigid partition (9) and said flexible wall (6); and
- rigid annular reinforcement (7) fixed directly to the periphery of the flexible wall (6) and engaged in the second strength member (3), the annular reinforcement (7) being clamped axially against the flat outer periphery of the rigid partition, said outer periphery presenting thickness that is less than the thickness of the annular reinforcement;
the annular reinforcement (7) including a peripheral groove (8) that is covered by the rigid partition (9) and that co-operates with the rigid partition to define the constructed passage (C),
**characterized in that** the annular reinforcement (7) is disposed entirely in register with the flat outer periphery of the rigid partition (9) and bears against said flat outer periphery on either side of the groove (8).

2. An antivibration support according to claim 1, in which the flexible wall (6) is overmolded on the annular reinforcement (7).

3. An antivibration support according to claim 1 or claim 2, in which the flexible wall (6) is bonded on the annular reinforcement (7).

4. An antivibration support according to any one of the preceding claims, in which the flexible wall (6) is snap-fastened on the annular reinforcement (7).

5. An antivibration support according to any one of the preceding claims, in which the annular reinforcement (7) is clamped against the rigid partition (9).

6. An antivibration support according to claim 5, in which an annular portion of the flexible wall is interposed between the annular reinforcement (7) and the rigid partition (9).

7. An antivibration support according to claim 5 or claim 6, in which the annular reinforcement (7) is fixed to the second strength member by at least one crimping (4a), the crimping also clamping said annular reinforcement against the rigid partition (9).

8. An antivibration support according to any one of the preceding claims, in which the constricted passage (C) communicates with the working chamber (A) via an opening (9a) formed through the rigid partition (9).

9. An antivibration support according to any one of the preceding claims, in which a portion (6b) of the flexible wall (6) lines the inside of the peripheral groove (8) of the annular reinforcement.

10. An antivibration support according to any one of the preceding claims, in which the rigid partition (9) comprises two superposed metal sheets (10, 11) presenting respective bulging central portions (12, 13) forming grids (14, 15) and defining between them a central housing (16) containing a flexible valve member (17) adapted to vibrate with limited clearance between the two grids (14, 15), which grids communicate respectively with the working chamber (A) and with the compensation chamber (B), the two superposed metal sheets also forming said flat outer periphery of the rigid partition around said bulging central portions (12, 13).
